# EUROPEAN PATENT APPLICATION

(11) **EP 4 653 237 A1**
(43) Date of publication of application: **26.11.2025**
(21) Application number: 24783970.7
(22) Date of filing: 02.02.2024
(51) Int. Cl.: B60L 3/04, H01H 85/20

(54) **VEHICLE AND POWER SYSTEM THEREOF**

(30) Priority: 07.04.2023 CN 202310364443
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Dong, Hangzhou, Zhejiang 310051 (CN); TANG, Li, Hangzhou, Zhejiang 310051 (CN); CHEN, Wei, Hangzhou, Zhejiang 310051 (CN); LYU, Tingting, Hangzhou, Zhejiang 310051 (CN); DENG, Xianpan, Hangzhou, Zhejiang 310051 (CN); WANG, Miao, Hangzhou, Zhejiang 310051 (CN); WANG, Pengxiang, Hangzhou, Zhejiang 310051 (CN); ZHOU, Dayong, Hangzhou, Zhejiang 310051 (CN)
(74) Representative: Range, Christopher William
(86) International application number: PCT/CN2024/075586
(87) International publication number: WO 2024/207885

(57) **Abstract**

Provided is a power system of a vehicle. The power system of the vehicle includes a first fuse box. The first fuse box is provided with a plurality of first fuses in the first fuse box. The plurality of first fuses is configured to be electrically connected to at least two of a headlight, a taillight, a door lock module, a wiper module, a steering system, a braking system, an onboard gateway module, a central controller, a collision controller, and a battery management system of the vehicle in a one-to-one correspondence. Further, provided is a vehicle using the power system. Fuses for post-collision attention functions are integrated together by the power system, thereby preventing post-collision rescue operations from being affected due to failure of the post-collision attention functions caused by power supply issues.

## Description

### CROSS-REFERENCE TO RELATED APPLICATION

This application claims priority to Chinese patent application No. 202310364443.8, titled "VEHICLE AND POWER SYSTEM THEREOF" and filed on April 07, 2023, the entire contents of which are incorporated herein by reference.

### FIELD

The present invention relates to, but is not limited to, the field of vehicle technologies, and more particularly to, but is not limited to, a power system of a vehicle and a vehicle.

### BACKGROUND

Safety performance of vehicle collisions has received widespread attention. The vehicle collisions typically involve frontal/side/rear impacts, rollovers, and pedestrian impacts. After collisions, certain functions of the vehicle must be available to help rescuers rescue the injured and identify the vehicle after the accident.

Currently, national mandatory standards mainly focus on post-collision door functionality. Under standard conditions for frontal impacts and side impacts, regulations require that doors remain openable. However, there is no explicit requirements for other post-collision functionalities. Therefore, most vehicles available on the market prioritize door operability whiling neglecting other post-collision functions critical for rescue operations.

After a collision, a battery and wiring harness need to be powered to ensure that functional devices corresponding to post-collision functions operate normally. The wiring harness routing usually follows a proximity-based wiring principle. That is, based on convenience of wiring harness routing, power supply wiring harnesses and fuses for geographically adjacent functional components are co-located. Such an arrangement results in excessive total harness length with distributed routing throughout the vehicle. During collision, it is unavoidable that the wiring harness may be cut due to deformation of vehicle body panels. The grounding of the cut wiring harness can cause the fuse rupture, leading to a drop in a vehicle's power supply voltage. The greater the number of the ruptured fuses, the more prolonged the voltage decay duration and the more pronounced the voltage drop magnitude becomes, potentially reaching 0 V. Consequently, this renders post-collision attention functions inoperative, thereby compromising emergency rescue operations.

### SUMMARY

A main objection of embodiments of the present invention is to provide a power system of a vehicle, which integrates fuses for post-collision attention functions together, thereby preventing post-collision rescue operations from being affected due to failure of the post-collision attention functions caused by power supply issues.

The technical solutions of the present invention are as follows.

A power system of a vehicle is provided. The power system includes a first fuse box. The first fuse box is provided with a plurality of first fuses in the first fuse box. The plurality of first fuses is configured to be electrically connected to at least two of a headlight, a taillight, a door lock module, a wiper module, a steering system, a braking system, an onboard gateway module, a central controller, a collision controller, and a battery management system of the vehicle in a one-to-one correspondence.

A vehicle is provided. The vehicle includes the power system of the vehicle as described above.

In the power system of the vehicle according to the embodiments of the present invention, post-collision rescuing functions are identified and classified. Not only fuses for post-collision attention functional devices such as a headlight, a taillight, a door lock module, a wiper module, a steering system, a braking system, an onboard gateway module, a central controller, a collision controller, and a battery management system are integrated and centrally housed in the first fuse box, but also the post-collision attention functional devices use separate first fuses, respectively, thereby preventing operation of a plurality of functional devices being affected by a certain first fuse that has tripped. In this way, a safety level of the vehicle can be enhanced.

Other aspects will become apparent upon reading and understanding the accompanying drawings and detailed description.

### BRIEF DESCRIPTION OF THE DRAWINGS

The accompanying drawings are used to provide further understanding for technical solutions of the present invention, constitute a part of the specification, and are used to explain the technical solutions of the present invention together with embodiments of the present invention, which do not constitute any limitation on the technical solutions of the present invention.
FIG. 1 is a schematic structural diagram of a power system of a vehicle according to some embodiments of the present invention.
FIG. 2 is a schematic flowchart illustrating an operating principle of a vehicle according to other embodiments of the present invention.
FIG. 3 is a diagram illustrating an operating principle of a second disconnect switch according to some embodiments of the present invention.
FIG. 4 is a diagram illustrating an operating principle of a pyrotechnic disconnect switch according to some embodiments of the present invention.

### DETAILED DESCRIPTION OF THE EMBODIMENTS

Technical solutions of the present invention will be further described below with reference to the accompanying drawings and specific embodiments. It should be understood that the specific embodiments described below are merely intended to explain, rather than limit, the present invention.

In existing vehicles, a basic power supply method involves connecting a positive terminal of a battery to a functional controller via a wire harness, and then connecting a negative terminal of the battery via the wire harness. In this method, a fuse is included to protect functional electrical components. When power supply to the wiring harness is abnormal, the fuses may fail, causing the entire power circuit to open, and the corresponding functions may fail. For an entire vehicle system, all functional electrical components are powered by batteries of 12 V in parallel. During a collision, a certain wire harness or a group of wire harnesses are often deformed and compressed by a body sheet panel or chassis in a collision deformation area, resulting in damage to the wire harness, which would lead to voltage drop or fuse failure.

Regardless of crash tests or actual traffic accidents, deformation of a vehicle body and the chassis is unavoidable. It is necessary to absorb collision energy through the deformation to reduce injuries to drivers and passengers. The wiring harness of the entire vehicle is routed throughout the vehicle, and thus it is unavoidable that the wiring harness is compressed. In other words, low voltage drop and fuse failure are unavoidable. Thus, after the collision, some functions of the vehicle may fail due to open circuits in the power supply. In severe cases, the entire vehicle's power supply may be lost.

In existing vehicles, a power supply logic is not classified to identify which functions can or cannot be allowed to fail after the collision. Instead, co-locating of power harnesses and fuses with certain functions is based on proximity and wiring routing convenience. As a result, after the collision, the functions concerned by the collision and rescue often fail, such as unlocking, an emergency call, a gateway, hazard lights, a wiper system, etc., which hinders the vehicle from providing sufficient support to subsequent vehicles and rescuers. Therefore, it is necessary to reduce a probability of failure of these post-collision attention functions as much as possible through an optimized power supply strategy, which is also a way to help reduce injuries to drivers and passengers.

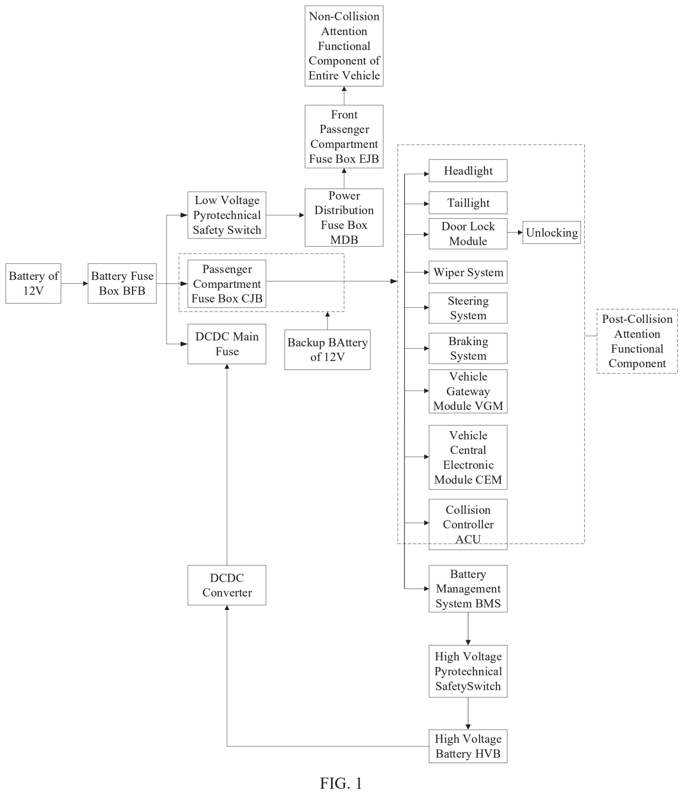

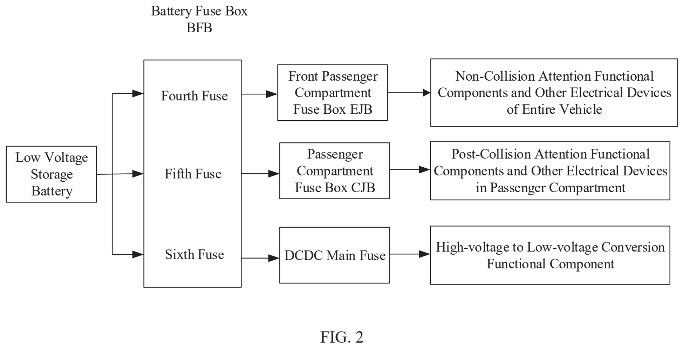

Based on this, as illustrated in FIG. 1 and FIG. 2, an embodiment of the present invention provides a power system of a vehicle. The system includes a first fuse box. The first fuse box is provided with a plurality of first fuses in the first fuse box. The plurality of first fuses is configured to be electrically connected to at least two of a headlight, a taillight, a door lock module, a wiper module, a steering system, a braking system, an onboard gateway module, a central controller, a collision controller, and a battery management system of the vehicle in a one-to-one correspondence.

In the power system of the vehicle, the first fuse box is provided with a plurality of first fuses in the first fuse box. The plurality of first fuses is configured to be electrically connected to at least two of post-collision attention functional devices such as the headlight, the taillight, the door lock module, the wiper module, the steering system, the braking system, the Vehicle Gateway Module (VGM), the Central Electronic Module (CEM), the Airbag Control Unit (ACU), and the Battery Management System (BMS) of the vehicle in the one-to-one correspondence. That is, the plurality of first fuses is connected in series in a one-to-one correspondence in circuits where the at least two of the post-collision attention functional devices such as the headlight, the taillight, the door lock module, the wiper module, the steering system, the braking system, the Vehicle Gateway Module (VGM), the Central Electronic Module (CEM), the Airbag Control Unit (ACU), and the Battery Management System (BMS) are located respectively, to ensure power supply safety of these post-collision attention functional devices such as the headlight, the taillight, the door lock module, the wiper module, the steering system, the braking system, the Vehicle Gateway Module (VGM), the Central Electronic Module (CEM), the Airbag Control Unit (ACU), and the Battery Management System (BMS) through the first fuses.

After the collision of the vehicle, the headlight and the taillight of the vehicle is operable to facilitate identification of the collided vehicle. The door lock module of the vehicle may control locking and unlocking of the door, and is operable after the collision of the vehicle. The door lock module may control unlocking of the door to facilitate the drivers and the passengers in the vehicle leaving the collided vehicle. The wiper module of the vehicle is operable after the collision of the vehicle to quickly remove objects such as liquids or solids on the windshield that affect line of sight, giving the driver a good field of vision. In this way, a chance of escape and self-rescue can be increased, minimizing casualties. The steering system and the braking system of the vehicle are operable after the collision of the vehicle in such a manner that the driver may control the vehicle and reduce the collision degree as much as possible. The VGM can safely and reliably interconnect and transmit data within multiple different networks within the vehicle. The VGM is operatable after the collision of the vehicle for emergency calls for rescue. The CEM of the vehicle as a main control unit of the vehicle body is operable after the collision of the vehicle to control the vehicle. The ACU of the vehicle is operable to control airbags, seat belts, etc. to provide protection for drivers and passengers. The BMS of the vehicle is operable to cut off power supply of a high-voltage power battery to a load end as quickly as possible to reduce a probability of accidents, especially fire accidents.

In the power system of the vehicle according to the embodiment of the present invention, post-collision rescuing functions are identified and classified. Not only fuses for post-collision attention functional devices are integrated and housed in the first fuse box, but also the post-collision attention functional devices use separate first fuses, respectively, thereby preventing operation of a plurality of functional devices being affected by a certain first fuse that has tripped. In this way, a safety level of the vehicle can be enhanced. The first fuse box may be referred to as a center junction box (CJB).

In some exemplary embodiments, as illustrated in FIG. 1, the power system of the vehicle further includes a low-voltage storage battery and a low-voltage backup battery. The first fuse box has a main power supply interface electrically connected to the low-voltage storage battery and a backup power supply interface electrically connected to the low-voltage backup battery.

The first fuse box not only uses the low-voltage storage battery of the whole vehicle to supply power, but also is powered by an additional low-voltage backup battery, forming a redundant design. In this way, a risk of power failure can be effectively reduced, and reliability of normal operations of the post-collision attention functional devices is improved.

The low-voltage storage battery may be a 12V battery. The low-voltage backup battery may be a 12V battery. In addition, similar power supply devices such as a 12V capacitor and a lithium battery may also be used. The low-voltage storage battery may be charged by converting a voltage from the power battery (high-voltage battery) of the whole vehicle. The low-voltage storage battery may also charge the low-voltage backup battery as desired.

In some exemplary embodiments, the first fuse box is configured as a passenger compartment fuse box installed in a passenger compartment of the vehicle. For example, the first fuse box is configured to be installed under a seat in the passenger compartment or at a step area in front of the seat in the passenger compartment.

The first fuse box may be referred to as the passenger compartment fuse box, and is arranged in a region of the passenger compartment that is not easily deformed, to avoid an influence of vehicle deformation on the first fuse box after the collision as much as possible. The first fuse box may be arranged at a lower side of the seat (for example, a lower side of a front seat or a lower side of a rear seat) or the step area in front of the seat (that is, an area for the driver and passenger to put their feet, for example, a step area in front of the front seat or a step area in front of the rear seat (between the front seat and the rear seat). The seats and the step areas in front of the seats are considered areas occupied by the human body. Since vehicle safety prioritizes human protection, arranging the first fuse box within these occupied areas enhances safety of the first fuse box and avoids the first fuse box from being deformed due to collisions.

In some exemplary embodiments, the first fuse box is provided with at least one second fuse in the first fuse box.

The at least one second fuse is configured to be electrically connected to one or more of a reading light and an ambient light in a passenger compartment, an air conditioning system, an instrument panel, and a steering wheel of the vehicle in a one-to-one correspondence.

The first fuse box is arranged in the passenger compartment. The passenger compartment is also provided with the reading light and the ambient light, the air conditioning system, the instrument panel, and the steering wheel. Therefore, as illustrated in FIG. 2, the second fuse in the circuit where other passenger compartment electrical devices such as the reading light, the ambient light, the air conditioning system, the instrument panel, and electronic components on the steering wheel are located may be arranged in the first fuse box based on the proximity-based principle, thereby avoiding an excessive power supply wiring harness length.

In some exemplary embodiments, as illustrated in FIG. 1 and FIG. 2, the power system of the vehicle further includes a second fuse box. The second fuse box is provided with at least one third fuse in the second fuse box. The at least one third fuse is configured to be electrically connected to one or more of a reading light and an ambient light in a passenger compartment, an air conditioning system, a water pump installed at a chassis of the vehicle, an engine, an active grille shutter, and an onboard radar of the vehicle in a one-to-one correspondence.

In addition to the above-mentioned post-collision attention function, there are also some functions that do not need to be maintained after the collision or are relatively simple. The third fuse in a circuit where functional devices associated with these functions is located may be integrated and centrally housed in the second fuse box.

The reading light in the passenger compartment, the ambient light in the passenger compartment, the air conditioning system, the water pump installed on the chassis (which may be used to input coolant to the required circuit to adjust a temperature of a component such as an engine temperature, a battery temperature (such as the low-voltage storage battery, the low-voltage backup battery, the power battery, etc.), a cab temperature, etc.), the engine, the active grille shutter, the onboard radar of the vehicle (such as a millimeter wave radar), and other functional devices do not need to be maintained after the collision, especially after a high-speed collision. Therefore, the third fuse may be connected to circuits in which these functional devices are located in series in a one-to-one correspondence.

It should be understood that fuses in the circuits where the reading light in the passenger compartment, the ambient light in the passenger compartment, and the air conditioning system are located may be arranged in the first fuse box based on the proximity-based principle, and fuses in circuits where the active grille shutter, the onboard radar of the vehicle, and the like are located may also be arranged in the first fuse box. Alternatively, since the reading light in the passenger compartment, the ambient light in the passenger compartment, the air conditioning system, the active grille shutter, the onboard radar of the vehicle, and the like are the functional devices that do not need to be maintained after the collision, the fuses in the circuits thereof may also be arranged in the second fuse box.

In some exemplary embodiments, the second fuse box is configured as a front compartment fuse box installed in an engine compartment (i.e., a front compartment) of the vehicle.

The second fuse box may be the front compartment fuse box disposed in the engine compartment, which facilitates maintenance and reduces a cost. The second fuse box may be referred to as an Engine junction box (EJB).

In some exemplary embodiments, as illustrated in FIG. 1, the power system of the vehicle further includes a Main Distribution Box (MDB), which may be disposed in front of the second fuse box and non-post-collision attention functional devices.

In some exemplary embodiments, as illustrated in FIG. 1, the power system of the vehicle further includes a first disconnect switch. The first disconnect switch is electrically connected between a low-voltage storage battery and the second fuse box. The first disconnect switch is configured to be electrically connected to a collision controller of the vehicle, and is capable of opening under a control of the collision controller at an occurrence of collision of the vehicle.

Adding the first disconnect switch upstream the second fuse box, the first disconnect switch is closed in a normal scenario. When the collision occurs, the collision controller may detect collision information of the vehicle by a sensor. After receiving a collision signal, the collision controller may control the first disconnect switch to complete a power-off operation for the second fuse box, effectively reducing or avoiding deformation of the engine compartment and compressing the wiring harness, which in turn affects a voltage of the whole vehicle.

In some exemplary embodiments, as illustrated in FIG. 1, the first disconnect switch may be a low voltage pyrotechnical safety switch (PSS). The low-voltage pyrotechnical safety switch may complete the power-off operation for the second fuse box within 1 ms to 2 ms (milliseconds) after receiving the signal from the collision controller. In addition, if a main power supply (the low-voltage storage battery) of the vehicle uses the lithium battery, since the battery management system (BMS) in the lithium battery may protect the lithium battery through an electronic fuse, adding the low-voltage pyrotechnical safety switch upstream a fuse MOS tube of the BMS of the lithium battery may sever the power supply, effectively protecting the lithium battery.

In some exemplary embodiments, as illustrated in FIG. 1 and FIG. 2, the power system of the vehicle further includes a third fuse box. The third fuse box includes a fourth fuse configured to be electrically connected between the low-voltage storage battery and the first fuse box and a fifth fuse configured to be electrically connected between the low-voltage storage battery and the second fuse box.

The third fuse box is added downstream the low-voltage storage battery. The third fuse box may be called as a Battery Fuse Box (BFB). The low-voltage storage battery may be electrically connected to the first fuse box through the fourth fuse in the third fuse box, and the low-voltage storage battery may be electrically connected to the second fuse box through the fifth fuse in the third fuse box. In this way, the first fuse box CJB and functional devices connected to the first fuse box, as well as the second fuse box (EJB) and functional devices connected to the second fuse box are separately powered, thereby avoiding mutual interference.

In some exemplary embodiments, as illustrated in FIG. 1 and FIG. 2, the third fuse box further includes a sixth fuse configured to be electrically connected between the low-voltage storage battery and a main fuse of a high-low voltage converter of a high-voltage power supply module of the vehicle.

When the vehicle is a hybrid vehicle or an electric vehicle, the high-voltage power supply module may supply power to the whole vehicle. High-voltage power output by a high-voltage battery of the high-voltage power supply module may be converted into low-voltage power through a high-low voltage converter (DCDC (Direct Current to Direct Current) converter) to supply power to low-voltage loads. The high-low voltage converter is provided with a main fuse (a DCDC main fuse) at an output end of the high-low voltage converter. The low voltage storage battery may be electrically connected to the DCDC main fuse via the sixth fuse in the third fuse box to supply power to a high-voltage to low-voltage conversion functional component (the DCDC converter or an ODP (an integrated vehicle power management module), or an all-in-one conversion device) via the DCDC main fuse. In addition, the high-voltage power output from the high-voltage battery, after being converted by the DCDC converter, may supply power to the low-voltage loads via the third fuse box, instead of directly supplying power to the low-voltage loads. Physical positions of the low-voltage storage battery and the third fuse box may or may not be arranged together.

Adding the third fuse box downstream the low-voltage battery allows the low-voltage battery or the high-voltage battery that is converted by the DCDC converter to separately supply power to the first fuse box (CJB) and the functional components connected to the first fuse box, the second fuse box (EJB) and the functional components connected to the second fuse box, and the DCDC main fuse and functional components connected to the DCDC main fuse, thereby avoiding mutual interference.

It should be understood that one of the DCDC main fuse and the sixth fuse in the third fuse box may be omitted.

In some exemplary embodiments, as illustrated in FIG. 1, the power system of the vehicle further includes a high-voltage power supply module. The high-voltage power supply module includes a power battery and a high-voltage power supply circuit. The power battery is configured to supply power to a load through the high-voltage power supply circuit. The high-voltage power supply circuit is provided with a second disconnect switch. The second disconnect switch is configured to be electrically connected to a collision controller of the vehicle, and is capable of opening under a control of the collision controller at an occurrence of collision of the vehicle.

When the vehicle is the hybrid vehicle or the electric vehicle, the vehicle further includes the high-voltage power supply module. The power battery (high-voltage battery) of the high-voltage power supply module may output the high-voltage power through the high-voltage power supply circuit. The high-voltage power may be supplied to a high-voltage load, or to the low-voltage load after being converted by DCDC converter. Adding the second disconnect switch on the high-voltage power supply circuit of the high-voltage battery ensures that an external power supply operation of the high-voltage power supply module can be quickly cut off at the occurrence of collision. In this way, secondary damage caused by the high voltage can be effectively reduced.

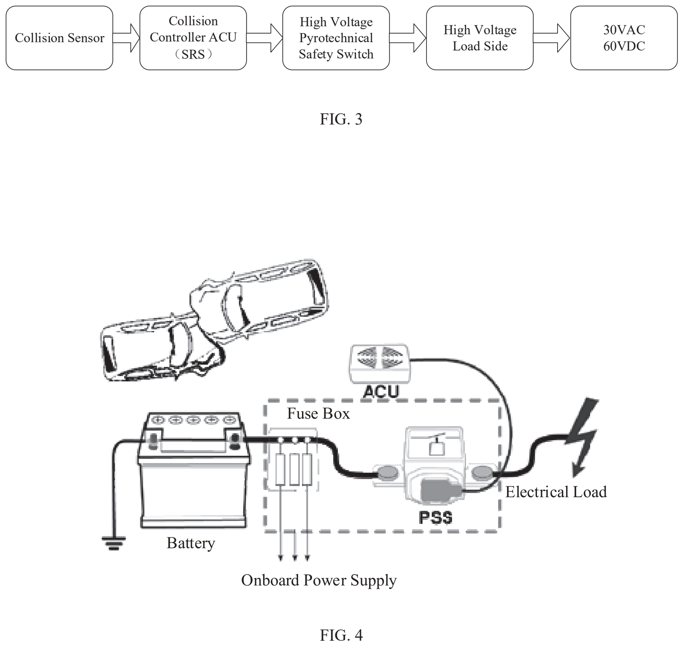

In some exemplary embodiments, as illustrated in FIG. 1, the second disconnect switch may be a high-voltage pyrotechnical safety switch. An operating principle of the high-voltage pyrotechnical safety switch is shown in FIG. 3.

Adding the high-voltage pyrotechnical safety switch on the high-voltage power supply circuit of the high-voltage battery can ensure that the external power supply of the high-voltage power supply module can be severed within 1 ms to 2 ms at the occurrence of collision. The high-voltage pyrotechnical safety switch may be arranged inside the high-voltage power supply module. The battery management system BMS may be electrically connected to the power battery through the high-voltage pyrotechnical safety switch (the high-voltage pyrotechnical safety switch may be connected in series on a battery management system BMS circuit). The high-voltage pyrotechnical safety switch is capable of opening or closing. When the second disconnect switch opens, power output from the high-voltage power supply module may be severed, while internal power supply of the high-voltage power supply module and decision-making of the Battery Management System (BMS) remains operational.

It should be understood that the first disconnect switch and the second disconnect switch are not limited to the pyrotechnical safety switch PSS (the operating principle of the pyrotechnical safety switch PSS is shown in FIG. 4), and they may also be other types of switches, such as relays.

A vehicle is further provided according to embodiments of the present invention. The vehicle includes the power system of the vehicle according to any one of the above embodiments.

The power system of the vehicle according to the embodiments of the present invention optimizes a logic of power supply of the whole vehicle, classifies functions of the whole vehicle, optimizes and improves functional safety redundancy for each link. In this way, post-collision functional problems under collision and extreme collision conditions can be solved, and perfection of functions such as post-collision unlocking, post-collision emergency call rescue, and post-collision high-voltage disconnection can be ensured. In the power system of the vehicle according to the embodiments of the present invention, a power supply strategy is changed and functions classification is realized. In addition, by additionally providing the passenger compartment fuse box, the front compartment fuse box, the battery fuse box, a low-voltage backup battery, a low-voltage pyrotechnical safety switch, and a high-voltage pyrotechnical safety switch, distributed power supply from the main power source is realized and increased redundancy is provided. As a result, the functional safety level of the vehicle is enhanced. This design can meet requirements of extreme and severe collision scenarios.

In the description of the embodiments of the present invention, the terms such as "first" "second" are only used for descriptive purposes, and cannot be understood as indicating or implying relative importance or implicitly indicating the number of indicated technical features. Therefore, the features associated with "first" and "second" may explicitly or implicitly include at least one of the features.

In the description of the present invention, "plurality" means at least two, such as two, three, unless otherwise specifically defined.

In the present invention, unless otherwise clearly specified and limited, terms, such as "mounting," "connect," "connect to," "fixed to," or the like, should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those skilled in the art, specific meanings of the above-mentioned terms in the present invention can be understood according to specific circumstances.

In the present invention, unless otherwise clearly specified and limited, the first feature "on" or "under" the second feature may mean that the first feature is in direct contact with the second feature, or the first and second features are in indirect contact through an intermediate. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than or equal to that of the second feature.

In the description of the present invention, the description with reference to the terms "one embodiment", "some embodiments", "an example", "a specific example", or "some examples", etc., means that specific features, structures, materials, or characteristics described in conjunction with the embodiment(s) or example(s) are included in at least one embodiment or example of the present invention. In the present invention, any illustrative reference of the above terms does not necessarily refer to the same embodiment(s) or example(s). Further, the particular features, structures, materials, or characteristics may be combined in any suitable manner in any one or more embodiments or examples. In addition, different embodiments or examples and features of different embodiments or examples described in the specification may be combined by those of ordinary skill in the art without mutual contradiction.

Although the embodiments of the present invention have been shown and described above, it should be understood that the above-mentioned embodiments are exemplary and should not be construed as limiting the present invention. Those of ordinary skill can make changes, modifications, substitutions, and alternations to the above-mentioned embodiments within the scope of the present invention.

It is conceivable for those of ordinary skill in the art that the functional modules/modules in all or some of the systems, devices in the methods disclosed above can be implemented in software, firmware, hardware, or any suitable combination thereof. In hardware implementations, division between functional modules/modules mentioned in the above description does not necessarily correspond to division of physical components. For example, one physical component may have multiple functions, or one function may be performed by several physical components in cooperation. Some or all of the components may be implemented as software executed by a processor, such as a digital signal processor or a microprocessor, or as hardware, or as an integrated circuit, such as an application specific integrated circuit. Such software may be distributed on a computer-readable medium, which may include a computer storage medium (or a non-transitory medium) and a communication medium (or a transitory medium). As is well known to those of ordinary skill in the art, the term of computer storage medium includes volatile and non-volatile, removable and non-removable media implemented in any method or technique for storing information (such as computer-readable instructions, data structures, program modules, or other data). Computer storage media include, but are not limited to, an RAM, an ROM, an EEPROM, a flash memory, or other memory technology, a CD-ROM, a digital versatile disk (DVD) or other optical disk storage, a magnetic cartridge, a magnetic tape, magnetic disk storage, or other magnetic storage devices, or any other medium that can be used to store desired information and can be accessed by a computer. Further, it is well known to those of ordinary skill in the art that communication media typically contain computer-readable instructions, data structures, program modules, or other data in modulated data signals such as carrier waves or other transmission mechanisms, and may include any information delivery medium.

Although the embodiments disclosed herein are as described above, the description is merely for the purpose of facilitating understanding of the embodiments adopted herein, and is not intended to limit the present invention. Any modifications and variations can be made by any person skilled in the art to which the present invention belongs in the form and details of the implementation without departing from the spirit and scope of the present invention, and the scope of the present invention shall be defined by the appended claims.

## Claims

1. A power system of a vehicle, the power system comprising a first fuse box, wherein the first fuse box is provided with a plurality of first fuses in the first fuse box, and wherein the plurality of first fuses is configured to be electrically connected to at least two of a headlight, a taillight, a door lock module, a wiper module, a steering system, a braking system, an onboard gateway module, a central controller, a collision controller, and a battery management system of the vehicle in a one-to-one correspondence.

2. The power system of the vehicle according to claim 1, further comprising a low-voltage storage battery and a low-voltage backup battery,
wherein the first fuse box has a main power supply interface electrically connected to the low-voltage storage battery and a backup power supply interface electrically connected to the low-voltage backup battery.

3. The power system of the vehicle according to claim 1, wherein the first fuse box is configured as a passenger compartment fuse box installed in a passenger compartment of the vehicle.

4. The power system of the vehicle according to claim 3, wherein the first fuse box is configured to be installed under a seat in the passenger compartment or at a step area in front of a seat in the passenger compartment.

5. The power system of the vehicle according to any one of claims 1 to 4, wherein the first fuse box is provided with at least one second fuse in the first fuse box,
wherein the at least one second fuse is configured to be electrically connected to one or more of a reading light and an ambient light in a passenger compartment, an air conditioning system, an instrument panel, and a steering wheel of the vehicle in a one-to-one correspondence.

6. The power system of the vehicle according to any one of claims 1 to 4, further comprising a second fuse box, the second fuse box being provided with at least one third fuse in the second fuse box,
wherein the at least one third fuse is configured to be electrically connected to one or more of a reading light and an ambient light in a passenger compartment, an air conditioning system, a water pump installed at a chassis, an engine, an active grille shutter, and an onboard radar of the vehicle.

7. The power system of the vehicle according to claim 6, wherein the second fuse box is configured as a front compartment fuse box installed in an engine compartment of the vehicle.

8. The power system of the vehicle according to claim 6, further comprising a first disconnect switch, wherein:
the first disconnect switch is electrically connected between a low-voltage storage battery and the second fuse box; and
the first disconnect switch is configured to be electrically connected to a collision controller of the vehicle, and is capable of opening under a control of the collision controller at an occurrence of collision of the vehicle.

9. The power system of the vehicle according to claim 6, further comprising a third fuse box,
wherein the third fuse box comprises a fourth fuse configured to be electrically connected between the low-voltage storage battery and the first fuse box and a fifth fuse configured to be electrically connected between the low-voltage storage battery and the second fuse box.

10. The power system of the vehicle according to claim 9, wherein the third fuse box further comprises a sixth fuse configured to be electrically connected between the low-voltage storage battery and a main fuse of a high-low voltage converter of a high-voltage power supply module of the vehicle.

11. The power system of the vehicle according to any one of claims 1 to 4, further comprising a high-voltage power supply module, wherein the high-voltage power supply module comprises:
a power battery; and
a high-voltage power supply circuit, the power battery being configured to supply power to a load through the high-voltage power supply circuit, and the high-voltage power supply circuit being provided with a second disconnect switch,
wherein the second disconnect switch is configured to be electrically connected to a collision controller of the vehicle, and is capable of opening under a control of the collision controller at an occurrence of collision of the vehicle.

12. A vehicle, comprising the power system of the vehicle according to any one of claims 1 to 11.
